# EUROPÄISCHE PATENTSCHRIFT

(11) **EP 1 264 434 B1**
(45) Veröffentlichungstag und Bekanntmachung des Hinweises auf die Patenterteilung: **13.09.2006**
(21) Anmeldenummer: 00990695.9
(22) Anmeldetag: 09.12.2000
(51) Int. Cl.: H04K 1/00

(54) **VERFAHREN UND SCHALTUNGSANORDNUNG ZUR SICHEREN DIGITALÜBERTRAGUNG**
METHOD AND CIRCUIT ARRANGEMENT FOR THE SECURE TRANSMISSION IN DIGITAL TRANSMISSION SYSTEMS
PROCEDE ET CIRCUIT POUR LA TRANSMISSION SECURISEE DANS DES SYSTEMES DE TRANSMISSION NUMERIQUES

(30) Priorität: 22.12.1999 DE 19961969; 23.03.2000 DE 10014463
(43) Veröffentlichungstag der Anmeldung: 11.12.2002
(73) Patentinhaber: Deutsche Telekom AG, 53113 Bonn (DE)
(72) Erfinder: KOMP, Günther, 64589 Stockstadt (DE); MATZNER, Rolf, 80995 München (DE)
(86) Internationale Anmeldenummer: PCT/EP2000/012463
(87) Internationale Veröffentlichungsnummer: WO 2001/047165

(56) Entgegenhaltungen:
- EP-A- 0 457 602
- EP-A- 0 865 181
- EP-A- 0 869 647
- WO-A-98/10567
- WO-A-99/55025
- US-A- 4 179 586
- MENEZES, A.J.;VAN OORSCHOT, P.C.; VANSTONE, S.A.: "Handbook of Applied Criptography" 1. Januar 1997 (1997-01-01) , CRC PRESS , USA XP002168909 Abbildung 1.7
- BAUML R W ET AL: "REDUCING THE PEAK-TO-AVERAGE POWER RATIO OF MULTICARRIER MODULATIONBY SELECTED MAPPING" ELECTRONICS LETTERS,IEE STEVENAGE,GB, Bd. 32, Nr. 22, 24. Oktober 1996 (1996-10-24), Seiten 2056-2057, XP000643915 ISSN: 0013-5194

## Beschreibung

Die Erfindung betrifft ein Verfahren zur Sicherung des Übertragungskanals bei Punkt-zu-Punkt- und Punkt-zu-Mehrpunkt-Digitalübertragungssystemen gemäß der im Oberbegriff des Patentanspruchs 1 angegebenen Art.

Ein bisher bekanntes Verfahren der so genannten "codierten Modulation" ist in IEEE Trans. on Information Theory, vol. IT-28, no. 1, pp. 55-67, Jan. 1982 von G. Ungerboeck unter dem Titel "Channel coding with multilevel/phase signals" beschrieben.

Außerdem ist von G. Ungerbroeck in IEEE Comm. Mag., vol. 25, no. 2, pp. 5-21, Feb. 1987 unter dem Titel "Trellis-coded modulation with redundant signals set" eine weitere bekannte Methode beschrieben.

Basisbandübertragungsverfahren sind zum Beispiel im ISDN- (ETSI TS080 r3a) und in HDS-Standard (ETSI TS 101 135 V1.4.1) beschrieben. Diese Verfahren weisen mehrere Stufen auf; ein solches Verfahren ist insbesondere auf den Seiten 21-22 des HDSL-Standards beschrieben.

Wie eindeutig aus der Beschreibung der bekannten Verfahren aus den genannten Veröffentlichungen hervorgeht, sind diese Verfahren in ihrer Anwendungsbreite eingeschränkt. Außerdem würde ganz besonders im Mbit/s-Bereich der technische Aufwand hoch liegen.

Aus der EP 0 457 602 A ist es bekannt, die Sicherheit der Datenübertragung dadurch zu gewährleisten, dass die Initialisierungsinformation, welche während der Trainingsphase wechselseitig zwischen Sender und Empfänger ausgetauscht wird und welche die Zuordnung der zu übertragenden Bits in einem Datenrahmen zu den Symbolen der einzelnen Träger festlegt, verschlüsselt übertragen wird und somit ein Angreifer, der mithört, nicht weiß, wie die Zuordnung ist, und deshalb das Signal nicht decodieren kann. Im Empfänger- und Sendegerät werden die Schlüssel vorher fest eingestellt. Mit statistischen Methoden kann aber diese Zuordnung errechnet werden. Bei einfachen Modulationsverfahren, wie z. B. Einträger- oder Basisbandverfahren, sind dazu nur wenige Rechenschritte nötig.

Der Erfindung liegt deshalb die Aufgabe zugrunde, ein Verfahren zur Sicherung des Übertragungskanals bei Punkt-zu-Punkt- und Punkt-zu-Mehrpunkt-Digitalübertragungssystemen zu schaffen, das auf der Verschleierung des Datenstromes beruht, speziell bei Bitraten im Mbit/s-Bereich den Einsatz zusätzlicher Hardware überflüssig macht und außerdem insbesondere bei DMT-Verfahren in ADSL-Systemen in Software umsetzbar ist, sowie eine Schaltungsanordnung zur Durchführung des Verfahrens zu schaffen.

Diese Aufgabe wird durch die kennzeichnenden Merkmale des Anspruchs 1 in Verbindung mit seinen Oberbegriffsmerkmalen gelöst.

Weitere Lösungen bzw. Ausgestaltungen der Erfindung sind Gegenstand der Unteransprüche.

Die Schaltungsanordnung zur Durchführung des Verfahrens ist Gegenstand des Patentanspruches 9.

Das neue Verfahren zur Sicherung des Übertragungskanals bei Punkt-zu-Punkt- und Punkt-zu-Mehrpunkt-Digitalübertragungssystemen besteht vor allem darin, dass es nicht auf Verschlüsselung des Datenstromes, sondern auf Verschleierung des Sendesignals beruht. Es erfolgt also keine, wie im Stand der Technik üblich, Verschlüsselung auf binärer Ebene.

Ein weiterer wesentlicher Vorteil der erfindungsgemäßen Lösung besteht darin, dass sie für alle Verfahren der Mehrträger-, Einträger- und trägerlosen Amplitudenmodulation-Pulsmodulation und codierten Modulation geeignet ist. Die Ver- und Entschleierung hat den Vorteil, dass speziell bei Bitraten im Mbit/s-Bereich der Einsatz spezieller zusätzlicher Hardware überflüssig ist und daß sie bei DMT-Verfahren in ADSL-Systemen in Software umsetzbar ist; dies war bei den bisher bekanntgewordenen Verfahren nicht möglich.

Weitere Vorteile, Merkmale und Anwendungsmöglichkeiten der vorliegenden Erfindung, insbesondere der Ver- und Entschleierung, ergeben sich aus der nachfolgenden Beschreibung in Verbindung mit den in der Zeichnung dargestellten Ausführungsbeispielen.

Die Erfindung wird im folgenden anhand von in der Zeichnung dargestellten Ausführungsbeispielen näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeuten:
- Fig. 1: ein prinzipielles Funktionsdiagramm;
- Fig. 2: ein detaillierteres Funktionsprogramm für Einträgerübertragungsverfahren und
- Fig. 3: ein Beispiel für die Verschleierung nach dem vorliegenden Verfahren.

Das vorliegende Verfahren zur Sicherung des Übertragungskanals, insbesondere bei Punkt-zu-Punkt- und Punkt-zu-Mehrpunkt-Digitalübertragungssystemen durch Verschleierung der Datenübertragung beruht darauf, daß die Verschlüsselung der Daten nicht in der Binärebene, sondern im Modulationsverfahren durch eine zeitliche Änderung der Modulationsparameter, die über einen sicheren Kanal zu einem Demodulator übertragen werden, erfolgt. Der sichere Kanal wird dabei extern durch einen getrennten Übertragungsweg implementiert oder in den Übertragungsweg integriert und mit kryptographischen Methoden geschützt.

Bei der Implementierung für Mehrträgerübertragungsverfahren, sogenannten Multitone-Verfahren, bei denen die Information in mehreren mittels Quadraturamplitudenmodulation QAM modulierten Kanälen transportiert wird, wird sowohl die Zuordnung von Rahmenbits auf die einzelnen Kanäle als auch die Zuordnung von Informationsbits zu den Modulationssymbolen pro Kanal (sogenanntes Mapping) und außerdem auch die Zuordnung des jeweiligen Modulationsalphabetes für jeden einzelnen Träger zeitlich variiert.

Für die Mehrträgerübertragungsverfahren, wie sie in den derzeitigen ADSL-Systemen nach ANSI-Standard T1E1.4/98-007 und ETSI DTS/TM-06006 festgelegt sind, erfolgt die Zuordnung von ADSL-Rahmenbits auf die einzelnen Kanäle (sogenanntes Tone Ordering), die Zuordnung der Informationsbits zu den Modulationssymbolen pro Kanal (sogenanntes Mapping) und auch die Zuordnung des Modulationsalphabets für jeden einzelnen Träger zeitlich variiert.

Für die Implementierung für Einträgerübertragungsverfahren mit Quadraturamplitudenmodulation QAM, wie sie im Richtfunk und im Breitbandkabel verwendet werden, erfolgt die Zuordnung der gesendeten Bits zu den Modulationssymbolen zeitlich variiert.

Für die Implementierung für trägerlose Amplituden-/Phasenmodulationsverfahren (sogenannten Carrierless AM/PM(CAP)-Verfahren), wie als Spezialfall bei Übertragung von HDSL-Systemen verwendet, erfolgt die Zuordnung der gesendeten Bits zu den Modulationssymbolen ebenfalls zeitlich variiert.

Für Basisbandübertragungsverfahren, zum Beispiel gemäß ISDN-(ETSI TS080 r3a) und HDSL-Standard (ETSI TS 101 135 V1.4.1), die mehr als zwei Stufen aufweisen, erfolgt die Zuordnung der gesendeten Bits zu den Signalstufen ebenfalls zeitlich variiert. Dies trifft auch für die sogenannten codierten Modulationen zu, wobei die Zuordnung der Informationsbits zu den Modulationssymbolen pro Kanal, (sogenanntes Mapping), die Codeparameter, wie zum Beispiel die Generatorpolynome bei Block- und Faltungscodes, ebenfalls zeitlich variiert werden.

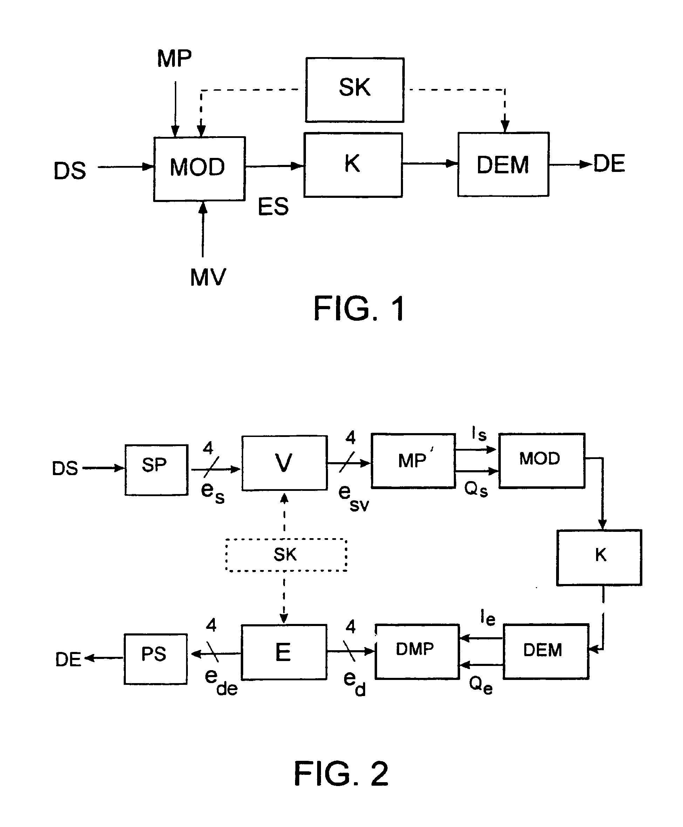

In Fig. 1 ist anhand eines prinzipiellen Funktionsschaubildes die prinzipielle Funktionsweise dargestellt. Anhand dieser Figur wird nun das erfindungsgemäße Verfahren zunächst prinzipiell beschrieben.

Der senderseitige Datenstrom DS wird zunächst einer Modulationseinheit MOD zugeführt, deren Modulationsparameter MP des Modulationsverfahrens MV zeitlich veränderlich sind. Die Modulationsparameter MP werden über einen sicheren Kanal SK zu einem Demodulator DEM übertragen. Am Ausgang der Modulationseinheit MOD liegt ein elektrisches Sendesignal ES an, das über den Kanal K übertragen wird. Der Demodulator DEM regeneriert unter Zuhilfenahme der Kenntnis der zeitabhängigen Modulationsparameter MP ein Empfangssignal eines Empfangsdatenstromes DE.

Ein weiteres Ausführungsbeispiel für ein Einträgerübertragungsverfahren 16 - QAM ist in Fig. 2 grundsätzlich dargestellt und wird im nachfolgenden erlärt.

Der serielle binäre Datenstrom DS wird auf den Eingang eines Seriell-/Parallel-Wandlers SP gegeben, der eine Umwandlung in 4-Bit-Worte vornimmt. Der Ausgang dieses Wandlers ist mit einer Verschleierungseinheit V verbunden, die eine zeitlich veränderliche Zuordnung eines Eingangswortes zum Ausgangswort erzeugt. Eine Modulationssymbolzuordnungseinheit MP' oder auch Mappingeinheit stellt dann eine eindeutige Zuordnung zum zu sendenden Kanalsymbol her, das durch die Werte Is und Qs gekennzeichnet ist. Der Modulator MOD erzeugt das elektrische HF-Signal, das über den Kanal K übertragen wird.

Empfangsseitig wird in einem Demodulator DEM das HF-Signal zu einem zweidimensionalen Basisbandsignal mit dem Komponenten Ie und Qe umgesetzt. Eine Demapping-Einheit DMP erzeugt ein binäres 4-Bit-Wort e_{d}. Eine nachfolgende Entschleierungseinheit E erzeugt an ihrem Ausgang das binäre 4-Bit-Wort e_{de}, das auf einen Parallel-/Seriell-Wandler PS gegeben wird und an dessen Ausgang als Empfangsdatenstrom DE zur Verfügung steht. Die Verschleierungssequenz wird mittels eines sicheren Kanals SK, der extern ausgeführt oder auch in den Hauptkanal integriert sein kann, zwischen der Verschleierungseinheit V und der Entschleierungseinheit E übertragen.

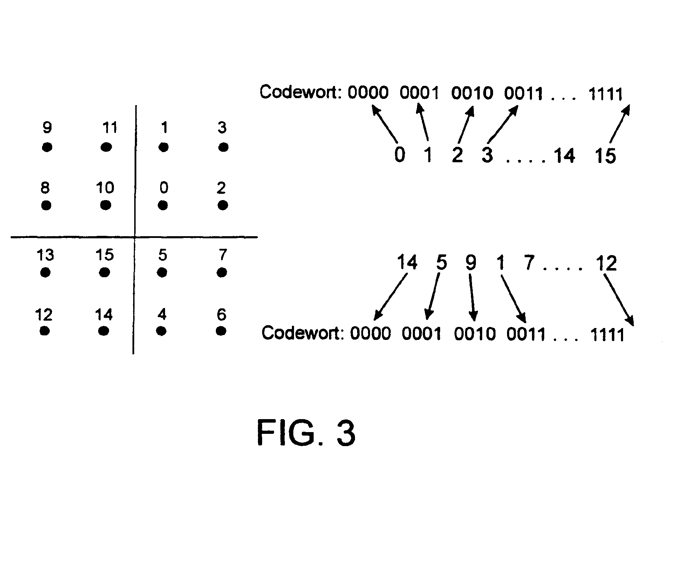

In Fig. 3 ist die prinzipielle Darstellung der Verschleierung von Codewörtern, wie sie dem vorliegenden Verfahren zugrunde liegt, gezeigt. Die Wirkung der Verschleierung ist am Beispiel des 16-QAM-Signalzustandsdiagramms dargestellt. Die Punkte des Diagramms entsprechen den möglichen Wertepaaren Iₛ und Qₛ am Eingang des Modulators MOD in Fig. 2. Da der Block Mapping MP eine eindeutige Abbildung des eingangsseitigen Binärvektors eₛᵥ auf einen Punkt des Konstellationsdiagramms bewirkt und ebenso der Block Verschleierung (V) eine eindeutige Abbildung von es auf eₛᵥ, kann man die Wirkung der Verschleierungseinheit V als einen eindeutigen Wechsel der Zuordnung der Punkte der Signalkonstellation zu den sechzehn verschiedenen Werten des Binärvektors es begreifen. Dieses Wechseln der Zuordnung ist durch die Pfeile in Fig. 3 angedeutet. Die Entschleierungseinheit E vollzieht diesen Wechsel der Zuordnung in umgekehrter Weise. Sofern kein Übertragungsfehler aufgetreten ist, ist das binäre Wort e_{de} am Ausgang der Entschleierungseinheit E identisch zu dem binären Wort es am Eingang der Verschleierungseinheit V.

### Liste der Bezugszeichen

- DE: Empfangsdatenstrom
- DEM: Demodulator
- DMP: Demappingeinheit
- DS: Datenstrom
- e_{d}, dₑ: Wort (binär)
- eₛ , eₛᵥ: Wort (binär)
- E: Entschleierungseinheit
- ES: elektrisches Sendesignal
- Iₛ, Qₛ: Komponenten des zweidimensionalen Basisbandsignals (am Modulatoreingang)
- Iₑ, Qₑ: Komponenten des zweidimensionalen Basisbandsignals (am Demodulatorausgang)
- MOD: Modulator
- MP: Modulationsparameter
- MP': Mappingeinheit oder Modulationssymbol-Zuordnungseinheit
- MV: Modulationsverfahren
- Qs: Kanalsymbol
- K: Kanal
- SP/PS: Seriell-/Parallel- bzw. Parallel-/Seriell-Wandler
- SK: sicherer Kanal
- V: Verschleierungseinheit

## Patentansprüche

1. Verfahren zur sicheren Übertragung von Daten eines Übertragungskanals in Punkt-zu-Punkt- und Punkt-zu-Mehrpunkt-Digitalübertragungssystemen, wobei eine Verschleierung eines elektrischen Sendesignals (ES) eines Datenstroms (DS) im Modulationsverfahren durch eine zeitliche Änderung von Modulationsparametern (MP) erfolgt **dadurch gekennzeichnet, dass** dass die Modulationsparameter (MP) über einen sicheren Kanal (SK) zu einem Demodulator (DEM) übertragen werden wobei die Modulations parameter (MP) durch die Zuordnung der Informationsbits zu den Modulationssymbolen eines Modulationsalphabets gebildet und zeitlich variiert werden.

2. Verfahren nach Anspruch 1, **dadurch gekennzeichnet, dass** der senderseitige Datenstrom (DS) einem Modulator (MOD) zugeführt wird, dass am Ausgang des Modulators (MOD) das elektrische Sendesignal (ES) anliegt, das über den Übertragungskanal (K) übertragen wird und dass der Demodulator (DEM) mittels der zeitabhängigen, Modulationsparameter (MP) den Datenstrom regeneriert.

3. Verfahren nach Anspruch 1 oder 2, **dadurch gekennzeichnet, dass** der sichere Kanal (SK) extern durch einen getrennten Übertragungsweg implementiert wird.

4. Verfahren nach einem der Ansprüche 1 oder 2, **dadurch gekennzeichnet, dass** der sichere Kanal (SK) in den Übertragungskanal (K) integriert ist und mit kryptographischen Methoden bzw. Verfahren zur sicheren Übertragung der Daten geschützt ist.

5. Verfahren nach einem der Ansprüche 1 oder 2, **gekennzeichnet durch** die Implementierung in einem Mehrträgerübertragungsverfahren, bei dem die Information in mehreren QAM-modulierten Kanälen transportiert wird.

6. Verfahren nach einem der Ansprüche 1 oder 4, **gekennzeichnet durch** die Implementierung in einem Einträgerübertragungsverfahren mit Quadraturamplitudenmodulation (QAM)

7. Verfahren nach den Ansprüchen 1 bis 4, **gekennzeichnet durch** die Implementierung für trägerlose Amplituden-/Phasenmodulationsverfahren, Carrierless AM/PM, CAP-Verfahren, für die Übertragung bei HDSL-Systemen

8. Verfahren nach einem der Ansprüche 1 bis 4, **gekennzeichnet, durch** die Implementierung für Verfahren der codierten Modulation wobei Zusätzlich die Codeparameter, insbesondere Generatorpolynome bei Block- und Faltungscodes, zeitlich variiert werden.

9. Schaltungsanordnung mit Mitteln zur Durchführung des Verfahrens nach einem der Ansprüche vorangehenden 17.

## Claims

1. Method for the secure transmission of data of a transmission channel in point-to-point and point-to-multipoint digital transmission systems, whereby the camouflaging of an electrical send signal (ES) of a data stream (DS) in the modulation process is effected by a time-related change of modulation parameters (MP), **characterized in that** the modulation parameters (MP) are transmitted via a secure channel (SK) to a demodulator (DEM), whereby the modulation parameters (MP) are formed and varied in time through assignment of the information bits to the modulation symbols of a modulation alphabet.

2. Method according to claim 1, **characterized in that** the data stream (DS) on the sender side is directed to a modulator (MOD), **in that** the electrical signal (ES) transmitted via the transmission channel is applied to the output of the modulator (MOD), and **in that** the demodulator (DEM) regenerates the data stream by means of the time-dependent modulation parameters (MP).

3. Method according to claim 1 or 2, **characterized in that** the secure channel (SK) is implemented externally through a separate transmission path.

4. Method according to either of the claims 1 or 2, **characterized in that** the secure channel (SK) is integrated in the transmission channel (K) and protected by cryptographic methods and/or procedures for the secure transmission of data.

5. Method according to either of the claims 1 or 2, **characterized by** being implemented in a multiple-carrier transmission method, wherein the information is transported in several QAM-modulated channels.

6. Method according to either of the claims 1 or 4, **characterized by** being implemented in a single-carrier transmission method with quadrature amplitude modulation (QAM).

7. Method according to the claims 1 to 4, **characterized by** being implemented for carrierless amplitude/phase modulation methods (carrierless AM/PM, CAP) for transmission in HDSL systems.

8. Method according to either of the claims 1 or 4, **characterized by** being implemented for methods of coded modulation, in addition with time-related variation of the code parameters, particularly generator polynomes for block and convolutional codes.

9. Circuit configuration with means for performing the method according to one of the preceding claims.

## Revendications

1. Procédé de transmission sécurisée de données d'un canal de transmission dans des systèmes de transmission numérique de point à point et de point à multipoint, un masquage d'un signal d'émission (ES) électrique d'un flux de données (DS) en procédé de modulation s'effectuant par une variation temporelle de paramètres de modulation (MP), **caractérisé en ce que** les paramètres de modulation (MP) sont transmis par l'intermédiaire d'un canal sécurisé (SK) vers un démodulateur (DEM), les paramètres de modulation (MP) étant formés et variés dans le temps par l'affectation des bits d'information aux symboles de modulation d'un alphabet de modulation.

2. Procédé selon la revendication 1, **caractérisé en ce que** le flux de données (DS) côté émission est appliqué à un modulateur (MOD), le signal d'émission (ES) électrique est présent à la sortie du modulateur (MOD) et transmis par l'intermédiaire du canal de transmission (K) et le démodulateur (DEM) régénère le flux de données moyennant les paramètres de modulation dépendant du temps.

3. Procédé selon la revendication 1 ou 2, **caractérisé en ce que** le canal sécurisé (SK) est mis en oeuvre extérieurement par un trajet de transmission séparé.

4. Procédé selon l'une des revendications 1 ou 2, **caractérisé en ce que** le canal sécurisé (SK) est intégré au canal de transmission (K) et protégé par des méthodes ou procédés cryptographiques pour la transmission sécurisée des données.

5. Procédé selon l'une des revendications 1 ou 2, **caractérisé par** la mise en oeuvre dans un procédé de transmission multiporteuse dans lequel les informations sont acheminées dans plusieurs canaux modulés QAM.

6. Procédé selon l'une des revendications 1 ou 4, **caractérisé par** la mise en oeuvre dans un procédé de transmission monoporteuse avec modulation d'amplitude en quadrature (MAQ).

7. Procédé selon les revendications 1 à 4, **caractérisé par** la mise en oeuvre pour des procédés de modulation amplitude/phase sans porteuse / carrierless AM/PM, /CAP/ pour la transmission dans des systèmes HDSL.

8. Procédé selon l'une des revendications 1 à 4, **caractérisé par** la mise en oeuvre pour des procédés de modulation codée, des paramètres de code, notamment des polynômes générateurs dans le cas des codes en bloc et des codes convolutifs, étant en plus variés dans le temps.

9. Circuit comportant des moyens pour la réalisation du procédé selon l'une des revendications précédentes.
